# DEMANDE DE BREVET EUROPEEN

(11) **EP 4 333 134 A1**
(43) Date de publication de la demande: **06.03.2024**
(21) Numéro de dépôt: 22306310.8
(22) Date de dépôt: 05.09.2022
(51) Int. Cl.: H01M 8/04119

(54) **PROCÉDÉ ET DISPOSITIF POUR HUMIDIFIER UNE VEINE DE GAZ AINSI QUE SYSTÈME DE PILES À COMBUSTIBLE ÉQUIPÉ D'UN TEL DISPOSITIF**

(71) Demandeur: Robert Bosch GmbH, 70442 Stuttgart (DE)
(72) Inventeur: PASTOR NIGORRA, Pere Antoni, 72074 TÜBINGEN (DE); VASSORT, Baptiste, 01700 MIRIBEL (FR)
(74) Mandataire: Cabinet HERRBURGER

(57) **Abrégé**

Procédé pour humidifier une veine de gaz dans un chemin de gaz (1) notamment une veine d'air dans un chemin d'air d'un système de piles à combustible selon lequel on injecte de l'eau dans la veine de gaz à l'aide d'une installation d'injection (2),
procédé caractérisé en ce que
on fait passer la veine de gaz par une réduction de section (3) dans le chemin de gaz (1) et on injecte de l'eau avec l'installation d'injection (2) dans la région de la réduction de section (3).

L'invention concerne également un dispositif pour humidifier une veine de gaz d'un chemin de gaz (1) et un système de piles à combustible équipé de ce dispositif.

## Description

### DOMAINE DE L'INVENTION

La présente invention se rapporte à un procédé et un dispositif pour humidifier une veine de gaz. Il s'agit notamment d'une veine d'air dans un chemin d'air d'un système de piles à combustible.

L'invention a également pour objet un système de piles à combustible équipé d'un tel dispositif pour humidifier une veine de gaz notamment pour humidifier de l'air.

### ETAT DE LA TECHNIQUE

Les piles à combustible transforment un combustible tel que de l'hydrogène et de l'oxygène en énergie électrique, en chaleur et en eau. Le fournisseur d'oxygène est en général l'air et notamment l'air ambiant. L'air nécessaire alimente une cathode de la pile à combustible par un chemin de gaz ou chemin d'air. Comme le procédé de conversion d'énergie nécessite un certain débit massique d'air et un certain niveau de pression, l'air alimentant le côté cathode est préalablement comprimé à l'aide d'un compresseur d'air installé dans le chemin d'air. Comme la compression chauffe l'air, on le refroidit avant son entrée dans la pile à combustible à l'aide d'une installation de refroidissement. En aval de l'installation de refroidissement, en général, un dispositif d'humidification humidifie en plus l'air comprimé, refroidi. L'humidification de l'air doit éviter l'assèchement des membranes de la pile à combustible car sinon, on risque d'endommager la pile à combustible.

Pour humidifier, on peut utiliser un humidificateur à membrane gaz/gaz alimenté en eau, notamment en eau de sous-produit qui provient du fonctionnement de la pile à combustible, et que l'on fait passer de la sortie à l'entrée de la pile à combustible. Mais, l'inconvénient est que l'humidificateur à membrane gaz/gaz est très encombrant et relativement couteux.

En variante, on peut humidifier l'air en injectant de l'eau dans la veine de gaz ou la veine d'air. Pour avoir une répartition régulière et une évaporation rapide de l'eau dans la veine d'air, on injecte l'eau sous pression de sorte que l'injection génère une pulvérisation de très petites gouttelettes. La pression nécessaire est de l'ordre de 3-30 bars et peut s'obtenir à l'aide d'une pompe supplémentaire. Mais, celle-ci augmente de nouveau l'encombrement et le prix.

### BUT DE L'INVENTION

La présente invention a pour but d'humidifier une veine de gaz alimentant un système de piles à combustible par injection d'eau sans pompe supplémentaire, pour réduire l'encombrement et le coût.

### EXPOSE ET AVANTAGES DE L'INVENTION

A cet effet, l'invention a pour objet un procédé tel que défini par les caractéristiques de la première revendication et un dispositif avec les caractéristiques de la septième revendication.

Des développements de l'invention apparaissent dans les revendications dépendantes.

L'invention a également pour objet un système de piles à combustible avec un dispositif selon l'invention.

### EXPOSE DE L'INVENTION

L'invention a pour objet un procédé pour humidifier une veine de gaz dans un chemin de gaz notamment une veine d'air dans un chemin d'air d'un système de piles à combustible selon lequel on injecte de l'eau dans la veine de gaz à l'aide d'une installation d'injection, ce procédé étant caractérisé en ce qu'on fait passer la veine de gaz par une réduction de section dans le chemin de gaz et on injecte de l'eau avec l'installation d'injection dans la région de la réduction de section.

Selon l'équation de Bernoulli, la veine de gaz est accélérée dans la région de la réduction de section alors que sa pression statique diminue. Cela permet de générer une différence de pression entre la pression du gaz dans le chemin de gaz et la pression de l'eau dans l'installation d'injection ; cette pression est suffisante pour injecter l'eau et la pulvériser. On évite ainsi une pompe supplémentaire.

Si le procédé est appliqué à un système de piles à combustible, on peut utiliser l'éventuelle différence de pression entre la pression régnant côté anode et la pression côté cathode. En général, cette pression n'est toutefois pas suffisante car les membranes de la pile à combustible sont conçues pour une différence de pression, par exemple, de 0,5 bar de sorte que la différence de pression disponible en fonctionnement est significativement en dessous de, par exemple, 0,1 bar. Le procédé tel que proposé ci-dessus permet d'augmenter la différence de pression pour qu'elle suffise en elle-même pour injecter de l'anode de la pile à combustible dans la veine de gaz et pulvériser l'eau.

La pulvérisation développe des gouttelettes d'eau extrêmement petites qui favorisent l'évaporation de l'eau injectée. De manière idéale, l'eau injectée s'évapore complètement pour éviter de s'accumuler à certains points du chemin de gaz et gêner le passage du gaz dans ce chemin.

Selon un développement de l'invention, l'eau est pulvérisée au moment de l'injection à l'aide d'une buse de l'installation d'injection. La buse participe à la pulvérisation très fine de l'eau au moment de l'injection de sorte que l'eau s'évapore aussi rapidement et complètement que possible. La buse permet en outre de régler un angle de jet plus grand qui participe à la distribution optimale de l'eau au moment de l'injection.

Suivant une autre caractéristique, on dérive une veine partielle de la veine de gaz dans le chemin de gaz en amont de la réduction de section et on la fournit à l'installation d'injection par une conduite de gaz notamment à la buse de l'installation d'injection de façon à injecter un mélange eau/gaz. La veine de gaz ainsi dérivée génère un jet partiel qui permet l'injection d'eau même pour une différence de pression plus faible entre la pression de l'eau et la pression du gaz régnant dans le chemin de gaz. Pour ce jet d'entraînement il suffit d'une fraction de la veine inférieure à 10% de la veine de gaz dans le chemin de gaz. Pour injecter le mélange eau/gaz, la buse de l'installation d'injection est, de préférence, réalisée sous la forme d'une double buse.

De manière avantageuse, un échangeur de chaleur installé en aval de la réduction de section dans le chemin de gaz, chauffe la veine de gaz humidifiée. Le chauffage favorise la vaporisation de l'eau injectée dans la veine de gaz ce qui diminue le risque d'une accumulation d'eau à cause d'une évaporation insuffisante. L'échangeur de chaleur peut utiliser l'énergie calorifique d'un autre milieu qui traverse l'échangeur de chaleur. Au passage de l'échangeur de chaleur, par cet autre milieu la chaleur transfère à la veine de gaz dans le chemin de gaz. Cet autre milieu est, par exemple le milieu réfrigérant d'un circuit de refroidissement ou de la veine d'air sortant du système de piles à combustible. L'échangeur de chaleur fournit ainsi non seulement l'énergie calorifique mais également une surface agrandie pour l'évaporation.

Comme il peut néanmoins arriver que l'eau injectée ne se vaporise pas totalement, pour éviter des accumulations gênantes d'eau, il est proposé de séparer l'eau non complètement vaporisée de la veine de gaz à l'aide d'un séparateur d'eau installé en aval de la réduction de section dans le chemin de gaz. L'eau résiduelle non évaporée est ainsi évacuée de manière ciblée de la veine de gaz.

Selon une autre caractéristique, l'eau préalablement séparée par le séparateur d'eau est renvoyée par une conduite d'eau au chemin de gaz dans la région de la réduction de section. Ainsi, le chemin de gaz avec la réduction de section et la conduite d'eau qui débouche dans le chemin de gaz dans la région de la réduction de section crée une buse venturi aspirant l'eau de la conduite d'eau dans le chemin de gaz par la dépression générée dans la mesure où la somme des pertes de pression produites par l'échangeur de chaleur et le séparateur d'eau reste inférieure à la différence de pression générée par la buse venturi. Le retour d'eau non évaporée dans le chemin de gaz pour être de nouveau évaporée, ne nécessite aucune pompe.

L'invention a également pour objet un dispositif pour humidifier la veine de gaz dans un chemin de gaz, notamment la veine d'air d'un chemin d'air d'un système de piles à combustible. Le dispositif comporte une installation d'injection dans le chemin de gaz pour injecter l'eau dans la veine de gaz. Selon l'invention, l'installation d'injection est installée dans la région de la réduction de section du chemin de gaz de sorte que l'eau sera injectée par l'installation d'injection dans la région de la réduction de section dans le chemin de gaz.

Le dispositif est notamment prévu pour appliquer le procédé selon l'invention tel que décrit ci-dessus et les avantages qui en résultent sont les mêmes que ceux du procédé. En particulier, la réduction de section dans le chemin de gaz permet de produire une différence de pression entre la pression de l'eau et la pression du gaz ou d'augmenter la différence de pression existante et d'injecter l'eau sans pompe supplémentaire, en utilisant simplement la différence de pression. Cela permet de réduire l'encombrement et le coût.

Dans un système de piles à combustible, le dispositif permet d'injecter l'eau produite par le fonctionnement notamment l'eau produite du côté de l'anode, à l'aide du dispositif dans la veine de gaz ou d'air. L'eau produite côté anode pour humidifier l'air côté cathode utilise la différence de pression entre l'anode et la cathode pour son injection.

Selon un développement préférentiel de l'invention, l'installation d'injection comporte une buse pour pulvériser l'eau d'injection. La buse permet de décomposer l'eau en des gouttelettes extrêmement fines de sorte que l'eau s'évapore plus rapidement. En outre, la buse permet de prédéfinir l'angle du jet pour répartir, de manière optimale les gouttelettes lors de l'injection dans la veine de gaz.

Suivant une autre caractéristique, le chemin de gaz a une conduite de gaz avec un orifice d'entrée en amont de la réduction de section et débouchant, de préférence, dans la région de la buse dans l'installation d'injection, de sorte que l'installation d'injection injecte un mélange eau/gaz. En amont la conduite de gaz logée dans le chemin de gaz prend une partie de la veine de gaz qui est fournie à l'installation d'injection par la conduite de gaz. Cette partie de la veine de gaz forme un jet d'entraînement favorisant l'injection, et permettant d'utiliser une différence plus faible de pression entre la pression de l'eau et la pression du gaz.

Suivant une autre caractéristique, un échangeur de chaleur est installé dans le chemin de gaz en aval de la réduction de section pour chauffer la veine de gaz humide. Chauffer la veine de gaz humide, favorise le procédé de vaporisation si bien que l'eau injectée s'évapore autant que possible complètement et ne développe pas des accumulations d'eau gênante dans le chemin de gaz.

Si toute l'eau ne s'évapore pas, un séparateur d'eau installé dans le chemin de gaz en aval de la réduction de section permet de séparer cette eau résiduelle non évaporée par rapport à la veine de gaz et de l'évacuer. La sortie du séparateur d'eau est, de préférence, relié par une liaison fluidique par une conduite d'eau au chemin de gaz dans la région de la réduction de section. Cela signifie que la conduite d'eau débouche dans la région de la réduction de section dans le chemin de gaz dont la réduction de section et la conduite d'eau forment une buse venturi. La veine de gaz dans le chemin de gaz dans la région de la réduction de section produit une dépression qui aspire l'eau de la conduite d'eau de sorte que le retour de l'eau résiduelle séparée par le séparateur d'eau ne nécessite pas de pompe supplémentaire.

Le dispositif selon l'invention s'applique, de préférence, à un système de piles à combustible. Le dispositif sert à humidifier la veine de gaz dans le chemin de gaz en réduisant l'encombrement et le coût. De façon préférentielle, le chemin de gaz est un chemin d'air alimentant au moins une pile à combustible avec de l'air. La veine de gaz est ainsi une veine d'air qui alimente au moins une pile à combustible avec l'oxygène comme gaz de réaction. En humidifiant l'air avant son entrée dans la pile à combustible, on évite le dessèchement de la membrane de la pile et ainsi le risque d'endommager la pile à combustible.

Pour humidifier l'air, on utilise, de préférence, l'eau produite du côté anode pendant le fonctionnement du système de piles à combustible. Cette eau peut être évacuée par un séparateur d'eau et alimenter le dispositif d'injection d'eau. Comme autre source d'eau, côté cathode, l'air de sortie de la pile à combustible est également chargée en eau. Cela suppose toutefois, que la pression à la sortie de la cathode est suffisante pour l'injection.

### BREVE DESCRIPTION DU DESSIN

La présente invention sera décrite ci-après de manière plus détaillée à l'aide d'un mode de réalisation représenté dans le dessin annexé dans lequel :

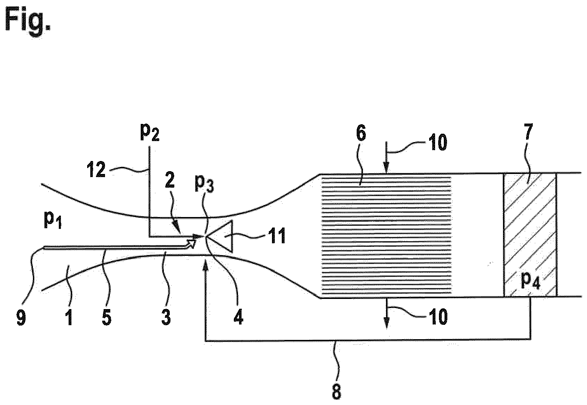

[Fig. 1] vue en coupe schématique d'un dispositif d'humidification d'une veine d'air dans un chemin de gaz d'une pile à combustible.

### DESCRIPTION DETAILLEE D'UN MODE DE REALISATION DE L'INVENTION

Le dispositif selon l'invention représenté dans la figure sert à humidifier une veine de gaz. Il comprend un chemin de gaz traversé par la veine de gaz. Le chemin de gaz est, en particulier, un chemin d'air d'un système de pile à combustible qui alimente en air une pile à combustible (non représenté).

Le chemin de gaz 1 comporte une réduction de section 3 dans la région de l'installation d'injection 2 pour injecter de l'eau. L'installation d'injection 2 comporte une buse 4 pour pulvériser finement l'eau injectée. En outre, la buse 4 permet de régler un cône d'émission 11 ayant un angle de jet plus grand de sorte que l'eau est distribuée de manière plus optimale dans l'injection.

En aval de la réduction de section 3, il règne une pression P1 dans le chemin de gaz 1. Cette pression est inférieure à la pression P2 régnant dans la conduite d'eau 12 de l'installation d'injection 2. Il en résulte une différence de pression. La réduction de section 3 accélère la veine de gaz dans le chemin de gaz 1 alors que la pression statique diminue ("équation de Bernoulli"). Dans la région de la réduction de section 3, il règne, dans le chemin de gaz 1, une pression P3 inférieure à la pression P1. La différence de pression entre les pressions P2 et P3 est supérieure à la différence de pression entre les pressions P2 et P1. L'installation d'injection 2 utilise cette différence de pression P2 et P3 dans la région de la réduction de section 3 pour injecter l'eau dans le chemin de gaz 1 évitant toute pompe supplémentaire.

Le chemin de gaz 1 comporte une conduite de gaz 5 avec un orifice d'entrée 9 par lequel on dérive une fraction de la veine de gaz en amont de la réduction de section 3 et on la fournit à l'installation d'injection 2. La conduite de gaz 5 débouche dans la région de la buse 4 dans l'installation d'injection 2. La veine partielle de gaz génère un jet d'entraînement dans l'installation de l'injection 2 qui assiste l'injection de l'eau.

Pour favoriser l'évaporation de l'eau injectée, il est prévu un échangeur de chaleur 6 dans le chemin de gaz 1 en aval de la réduction de section 3. L'échangeur de chaleur 6 est traversé par un agent, par exemple, un fluide caloporteur d'un circuit frigorifique 10 qui restitue la chaleur prise par le passage de l'échangeur de chaleur 6 vers la veine de gaz humidifiée, dans le chemin de gaz 1. Le chauffage de la veine de gaz favorise, si possible, l'évaporation complète de l'eau injectée.

Comme on ne peut exclure la vaporisation incomplète de toute l'eau, de sorte qu'en aval de l'échangeur de chaleur 6, la veine de gaz contient encore de l'eau à l'état liquide, le dispositif comporte après l'échangeur de chaleur, un séparateur d'eau 7. Le séparateur d'eau 7 permet de séparer l'eau liquide contenue dans la veine de gaz et l'évacuer. On évite ainsi les accumulations dangereuses de chaleur dans le chemin de gaz 1.

Dans le dispositif représenté, le séparateur d'eau 7 est relié par une liaison fluidique, par la conduite d'eau 8, au chemin de gaz 1 ; la conduite d'eau 8 débouche dans la région de la réduction de section 3 dans le chemin de gaz 11. Comme dans la région du séparateur d'eau 7 il règne une pression p₄ supérieure à la pression p₃ dans la région de la réduction de section 3, de gaz 1 avec la réduction de section 3 et la conduite d'eau 8, forment une buse Venturi. L'eau est ainsi aspirée uniquement par la dépression dans la région de la réduction de section 3 par la conduite d'eau 8 dans cette région de réduction de section 3. On évite ainsi une pompe. En outre, l'eau non complètement évaporée peut repasser dans l'échangeur de chaleur 6 pour être évaporée.

### NOMENCLATURE DES ELEMENTS PRINCIPAUX

- 1: Chemin de gaz
- 2: Installation d'injection
- 3: Réduction de section
- 4: Buse
- 5: Conduite de gaz
- 6: Echangeur de chaleur
- 7: Séparateur d'eau
- 8: Conduite d'eau
- 9: Orifice d'entrée de la conduite de gaz
- 10: Circuit de refroidissement
- 11: Jet conique
- 12: Conduite d'eau

## Revendications

1. Procédé pour humidifier une veine de gaz dans un chemin de gaz (1) notamment une veine d'air dans un chemin d'air d'un système de piles à combustible selon lequel on injecte de l'eau dans la veine de gaz à l'aide d'une installation d'injection (2),
procédé **caractérisé en ce que**
on fait passer la veine de gaz par une réduction de section (3) dans le chemin de gaz (1) et on injecte de l'eau avec l'installation d'injection (2) dans la région de la réduction de section (3).

2. Procédé selon la revendication 1,
**caractérisé en ce que**
on pulvérise l'eau d'injection à l'aide d'une buse (4) de l'installation d'injection (2).

3. Procédé selon la revendication 1 ou 2,
**caractérisé en ce que**
on dérive une veine partielle de la veine de gaz dans le chemin de gaz (1) en amont de la réduction de section (3), et on la fournit par une conduite de gaz (5) de l'installation d'injection (2), notamment la buse (4) de l'installation d'injection (2) de sorte que l'on injecte un mélange eau/gaz.

4. Procédé selon l'une des revendications précédentes,
**caractérisé en ce que**
on chauffe la veine de gaz humidifiée par un échangeur de chaleur (6) installé en aval de la réduction de section (3) dans le chemin de gaz (1).

5. Procédé selon l'une des revendications précédentes,
**caractérisé en ce que**
on sépare l'eau non vaporisée de la veine de gaz à l'aide d'un séparateur d'eau (7) installé en aval de la réduction de section (3) dans le chemin de gaz (1).

6. Procédé selon la revendication 5,
**caractérisé en ce que**
préalablement, on reconduit l'eau séparée à l'aide du séparateur d'eau (7) par une conduite d'eau (8) dans la région de la réduction de section (3).

7. Dispositif pour humidifier une veine de gaz dans un chemin de gaz (1) notamment une veine d'air dans un chemin d'air d'un système de piles à combustible comprenant une installation d'injection (2) installée dans le chemin de gaz (1) pour injecter de l'eau dans la veine de gaz,
dispositif **caractérisé en ce que**
l'installation d'injection (2) est placée dans la région d'une réduction de section (3) du chemin de gaz (1) pour injecter l'eau avec l'installation d'injection (2) dans la région de la réduction de section (3) dans le chemin de gaz (1).

8. Dispositif selon la revendication 7,
**caractérisé en ce que**
l'installation d'injection (2) comporte une buse (4) pour pulvériser l'eau à l'injection.

9. Dispositif selon la revendication 7 ou 8,
**caractérisé en ce que**
une conduite de gaz (5) est prévue dans le chemin de gaz (1), cette conduite ayant un orifice d'entrée (9) en amont de la réduction de section (3) débouche de préférence, dans l'installation d'injection (2) dans la région de la buse (4) de sorte que l'installation d'injection (2) injecte un mélange eau/gaz.

10. Dispositif selon l'une des revendications 7 à 9,
**caractérisé en ce que**
le chemin de gaz (1) est équipé d'un échangeur de chaleur (6) en aval de la réduction de section (3) pour chauffer la veine de gaz humifiée.

11. Dispositif selon l'une des revendications 7 à 10,
**caractérisé en ce que**
le chemin de gaz (1) est équipé d'un séparateur d'eau (7) en aval de la réduction de section (3), ce séparateur étant relié, de préférence, en sortie par une conduite d'eau (8) au chemin de gaz (1) dans la région de la réduction de section (3) par une liaison fluidique.

12. Système de piles à combustible comportant un dispositif selon l'une des revendications 7 à 11, le chemin de gaz (1) étant un chemin d'air pour alimenter au moins une pile à combustible.
